# EUROPÄISCHE PATENTSCHRIFT

(11) **EP 2 402 268 B1**
(45) Veröffentlichungstag und Bekanntmachung des Hinweises auf die Patenterteilung: **31.07.2013**
(21) Anmeldenummer: 11182758.0
(22) Anmeldetag: 29.11.2006
(51) Int. Cl.: B65G 15/14, B65G 15/42

(54) **Riemen zum Transportieren von Gefässen**
Belts for transporting containers
Courroies pour le transport de récipients

(30) Priorität: 06.12.2005 DE 202005019111 U
(43) Veröffentlichungstag der Anmeldung: 04.01.2012
(62) Teilanmeldung aus: 06024680.8
(73) Patentinhaber: Krones AG, 93073 Neutraubling (DE)
(72) Erfinder: Zistler, Johann, 93342 Mitterfecking (DE); Dünzinger, Bernhard, 84069 Unterdeggenbach (DE)
(74) Vertreter: Grünecker, Kinkeldey, Stockmair & Schwanhäusser

(56) Entgegenhaltungen:
- EP-A- 1 291 304
- EP-A1- 0 979 251
- EP-A1- 1 153 714
- DE-B- 1 194 320
- DE-U1- 29 617 281
- DE-U1- 29 821 826
- FR-A1- 2 265 637
- GB-A- 1 175 094
- GB-A- 1 538 275
- US-A- 3 237 757
- US-A- 3 245 518
- US-A- 4 798 281

## Beschreibung

Die Erfindung betrifft eine Transportiereinrichtung zum Transportieren von Gefäßen gemäß dem Oberbegriff des Anspruchs 1.

Entsprechende Riemen zum Transportieren von Gefäßen oder dgl. Gegenständen in einer Behandlungsmaschine, wie z.B. einer Gefäßinspektionsmaschine, sowie eine Transporteinrichtung zum Transportieren von gefäßen gemäß dem Oberbegriff des Anspruchs 1, sind aus DE 298 21 826 U1 (siehe Fig. 2) bekannt. Zum bodenfreien Transportieren von Flaschen in Inspektionsmaschinen oder anderen
Gefäßbehandlungsmaschinen werden diese Riemen durch eine paarweise gegenüberliegende Anordnung zur Bildung eines Flaschenförderkanals verwendet. Ihr gegenseitiger Zwischenabstand ist zumindest geringfügig kleiner gewählt als der Außendurchmesser der Flaschen. Dadurch können in diesen Flaschenkanal eintretende Flaschen seitlich zwischen den elastischen Riemen eingeklemmt und im weiteren Verlauf reibschlüssig gefördert werden.

Die hierfür zum Einsatz kommenden Riemen bestehen aus einem Zahnriemen mit einer einseitig angeformten Verzahnung und einer auf der gegenüberliegenden Seite angeordneten elastischen Schwammauflage, die mit den Flaschen reibschlüssig in Eingriff gebracht wird. Um eine exakte vertikale Führung des auf einer geschlossenen Bahn in einer horizontalen Ebene umlaufenden endlosen Riemens zu gewährleisten, besitzt dieser auf seiner verzahnten Seite eine in etwa in der Mitte der Zähne längs zur Transportrichtung durchgehend verlaufende Stegleiste.

Die erwähnte Schwammauflage weist eine weitgehend offene Porenstruktur auf, in die Wasser, Reinigungsmittel, Bakterien, Hefesporen, Schmutz und andere unerwünschte Stoffe eindringen und verbleiben können. Dieser Umstand ist insbesondere in aseptisch arbeitenden Abfülllinien für Getränke oder Lebensmittel nicht tragbar, da hier keimfreie Gefäße wie Flaschen aus Glas oder Kunststoff einem dem Befüllungsprozess vorangehenden Inspektionsschritt zur Überprüfung der leeren Gefäße unterzogen werden und dabei verkeimt werden könnten.

Der Erfindung liegt demzufolge die Aufgabe zugrunde, einen für erhöhte hygienische Anforderungen geeigneten Riemen zum Transportieren von Gefäßen oder dgl. in Behandlungsmaschinen anzugeben.

Die Aufgabe wird durch die kennzeichnenden Merkmale des Anspruchs 1 gelöst.

Der beispielsweise als Zahnriemen ausgebildete Treibriemen ist an seiner von der Antriebsverzahnung wegweisenden Seite mit einer elastischen Auflage versehen, die eine durchgehend geschlossene, porenfreie Oberfläche besitzt. Durch das Fehlen von Hohlräumen im Material der Auflage ist nicht nur das Einnisten unerwünschter Substanzen ausgeschlossen, sondern auch eine Behandlung mit Sterilisationsmitteln, wie Chemikalien, Dampf, UV-Bestrahlung oder Heißwasser möglich, um überhaupt erst einen keimfreien, sterilen Zustand des Riemens herbeizuführen.

Als Materialien kommen alle den Anforderungen entsprechende elastische Natur- oder Kunstwerkstoffe wie Elastomere, Gummi, Kautschuk oder Mischungen verschiedener Werkstoffe in Betracht. Auf Grund der vorzüglichen chemischen und thermischen Beständigkeit ist insbesondere elastisches PVC gut für diese Aufgabe geeignet.

Bevorzugt weist die mit den Gefäßen in Eingriff bringbare Oberfläche der Auflage eine Struktur auf, die beispielsweise durch eine Vielzahl von gleichmäßig angeordnete, erhaben ausgeformte, noppen-, finger-, lamellen- oder zahnartige Elemente gebildet sein kann, jedoch insgesamt einteilig ist und dadurch eine geschlossene Oberfläche besitzt.

Die Elemente können in nur einer oder mehreren parallelen Reihen in Richtung der Längserstreckung des Riemens verlaufend ausgerichtet sein und gegenüber benachbarten Reihen einen Teilungsversatz aufweisen. Durch diese federelastischen Elemente ist mit nur geringer punktueller Krafteinwirkung auf die Gefäße ein sicherer reibschlüssiger Transport ohne Bodenunterstützung möglich.

Weitere vorteilhafte Ausgestaltungen sind Gegenstand der verbleibenden Unteransprüche.

Die Erfindung betrifft außerdem einen Riemen zum Transportieren von Gefässen oder dgl. Gegenständen in einer Behandlungsmaschine bestehend aus einem Treibriemen und einer mit den Gefässen in Eingriff bringbaren Auflage, dadurch gekennzeichnet, dass die Auflage aus einem elastischen Material mit geschlossener Oberfläche gebildet wird, und dass die Auflage und darauf erhaben ausgeformte Elemente aus einem Sterilisierbaren Material bestehen.

Vorteilhafterweise kann dieser Riemen so ausgebildet, dass die mit den Gefässen in Eingriff bringbare Oberfläche der Auflage strukturiert ausgebildet ist.

Gemäß einer Weiterbildung des zuvor beschriebenen Riemens kann dieser so vorgesehen sein, dass die mit den Gefässen in Eingriff bringbare Oberfläche der Auflage aus einer Vielzahl von noppen- und/oder finger- und/oder lamellen- und/oder sägezahnförmig geformten Elementen gebildet wird.

Hierbei kann die Oberfläche der Auflage bildenden Elemente in ihrer Gesamtheit einstückig ausgebildet sein.

ein derartiger Riemen kann so ausgebildet sein, dass die Elemente mit gleichmässigen Abständen, vorzugsweise mit ihrer Breite entsprechenden freien Zwischenräumen, in wenigstens einer längs zur Förderrichtung verlaufenden Reihe angeordnet sind, insbesondere mit einem Teilungsmass im Bereich zwischen 20 und 30 mm.

In diesem Fall können die Elemente in mehreren, vorzugsweise drei, quer zur Förderrichtung versetzten Reihen angeordnet sein.

Auch kann der Riemen so vorgesehen werden, dass die Elemente benachbarter Reihen längs zur Förderrichtung versetzt angeordnet sind, vorzugsweise um den halben Teilungsabstand von in einer Reihe liegenden Elementen.

Alle zuvor beschriebenen Riemen können derart weitergebildet werden, dass die Auflage und darauf erhaben ausgeformte Elemente insbesondere aus PVC, bestehen.

Erfindungsgemäß kann der Treibriemen auf der von der Auflage wegweisenden Seite eine Antriebsverzahnung und ggf. einen vorzugsweise mittig verlaufenden Längssteg aufweisen.

Alle zuvor beschriebenen Riemen können endlos ausgeführt sein.

Auch können alle zuvor beschriebenen Riemen so weitegebildet werden, dass wenigstens zwei mit Abstand einander in einer Umlaufebene gegenüberliegend angeordnete, mit gleicher oder voneinander abweichender, gleichsinnig gerichteter Geschwindigkeit antreibbare Riemen eine Riemenstation zum bodenfreien Transportieren von Gefässen bilden.

Alle zuvor beschriebenen der Riemen können Bestandteil einer Riemenstation einer Inspektionsmaschine zum Kontrollieren von Flaschen oder dgl. Gefässe mit im Bereich der Riemenstation angeordneten Inspektionseinrichtungen sein.

Hierbei können der Riemenstation können ein Gefässe am Boden abstützend heranführender Zuförderer vorgeordnet und/oder ein ebenfalls am Boden der Gefässe angreifender Abförderer nachgeordnet sein.

Weitere vorteilhafte Ausgestaltungen sind Gegenstand der verbleibenden Unteransprüche.

Nachfolgend werden Ausführungsbeispiele anhand der Figuren erläutert. Es zeigt:
- Fig. 1: eine Draufsicht einer Inspektionsmaschine mit einem Riemenpaar in schematischer Darstellung
- Fig. 2: einen Schnitt durch einen perspektivisch dargestellten Riemen entsprechend einer ersten Ausführung für eine Maschine gemäß Fig. 1 und

- Fig. 3: einen Schnitt durch einen perspektivisch dargestellten Riemen entsprechend einer zweiten Ausführung.

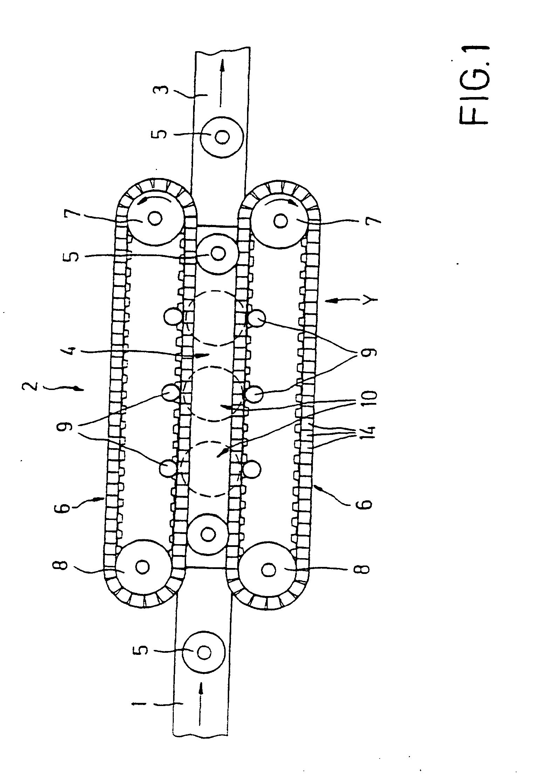

Die Inspektionsmaschine nach Fig. 1 besitzt einen Zuförderer 1, einen Abförderer 3 und eine dazwischen liegende Riemenstation 2. Zwischen dem Zuförderer 1 und dem Abförderer 3 befindet sich ein Freiraum 4 mit Einbauten 10, wie Lichtquellen oder dgl. und wenigstens einer
Inspektionseinrichtung (Kamera, Sensoren), z.B. für eine Flaschenbodenkontrolle. Zur Überbrückung des genannten Freiraumes 4 ist die lichte Weite der zueinander weisenden Trume der beiden parallelen, die Riemenstation 2 bildenden endlosen Riemen 6 zumindest geringfügig enger gewählt als der Außendurchmesser einer Flasche 5, so dass eine auf dem Zuförderer 1 aufrechtstehend zugeführte Flasche 5 durch die Riemen an der Mantelfläche erfassbar und im weiteren Verlauf bis zum Abförderer 3 bodenfrei an den die
Inspektionseinrichtungen bildenden Einbauten 10 im Freiraum 4 vorbeiführbar ist. Die zusammenwirkenden Trume können gleichgerichtet mit synchroner Geschwindigkeit gleich schnell oder mit einer bestimmten Geschwindigkeitsdifferenz angetrieben werden, um ggf. eine gewünschte, genau definierte Drehbewegung der Flaschen beim Durchlaufen der Riemenstation herbeizuführen.

Angetrieben werden die Riemen 6 durch jeweils ein Zahnriemenrad 7. Ferner sind für jeden Riemen 6 jeweils ein frei drehbar gelagertes Umlenkrad 8 und ggf. noch mehrere Stützrollen 9 vorgesehen. Beide Räder 7 und 8 drehen sich jeweils um vertikale Achsen.

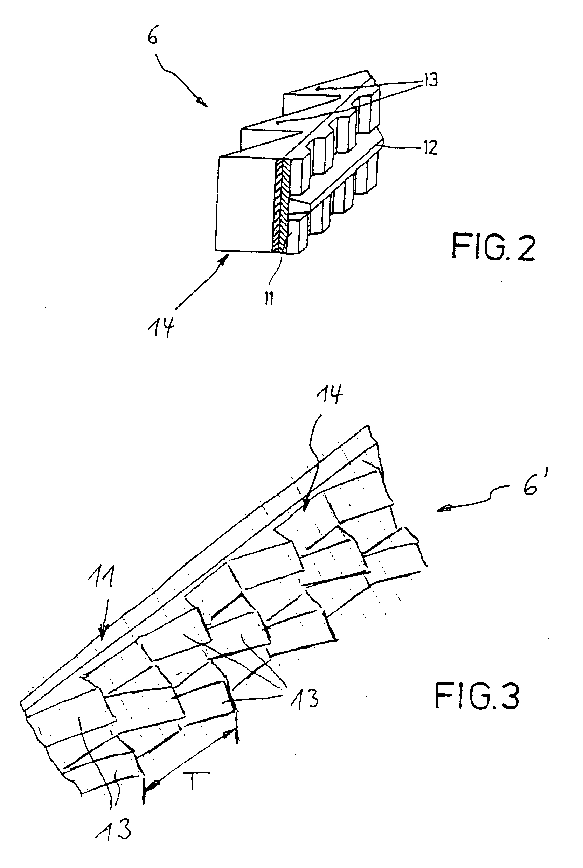

Aus der Fig. 2 ist der Aufbau eines Riemens 6 aus der antriebsseitigen Perspektive gesehen näher erkennbar. Das Grundgerüst bildet ein Zahnriemen 11 als Treibriemen, der auf halber Höhe eine in Längsrichtung verlaufende, elastische Stegleiste 12 zur Höhenführung des Riemens aufweist. An der von der Verzahnung wegweisenden Seite des Zahnriemens 11 ist eine elastische Auflage 14 angeordnet. Sie weist mehrere in gleichmäßigen Abständen längs zur Riemenerstreckung angeordnete zägezahnförmig ausgebildete elastische Elemente 13 aus PVC auf. Diese Sägezähne besitzen eine in Laufrichtung schräg nach vorne gerichtete Vorderflanke und eine entgegengesetzt zur Laufrichtung weisende, rechtwinklig zum Treibriemen ausgerichtet verlaufende Hinterflanke auf.

Fig. 3 zeigt eine abgewandelte, zweite Ausführung eines Riemens 6' von der gegenüberliegenden Seite aus dargestellt. Auch hier besitzt die Auflage 14 eine aus einer Vielzahl ebenfalls aus sägezahnartig geformten elastischen Elementen 13 gebildete, in sich einstückige und eine durchgehend geschlossene Oberfläche aufweisende Struktur. Die Elemente sind hier allerdings in drei übereinander liegenden Reihen angeordnet und in jeweils benachbarten Reihen mit einem dem halben Teilungsabstand des innerhalb einer Reihe von Elementen vorliegenden Teilungsrasters versetzt positioniert. Das Teilungsmaß T zwischen zwei aufeinanderfolgenden Sägezähnen in einer Reihe kann deren doppelter Breite entsprechen, d.h. es bestehen Zwischenräume mit der Breite eines Sägezahns. Das Teilungsmaß T liegt bevorzugt im Bereich von 20-30 mm.

Der zusammen mit der Stegleiste 12 den Treibriemen bildende Zahnriemen 11 und die die elastischen Elemente 13 aufweisende Auflage 14 können vorzugsweise ein gemeinsames Extrusions-oder Coextrusionsteil bilden. Es besteht aber auch die Möglichkeit, die Auflage 14 als separates Teil durch Kleben, Verschweißen oder ein sonstiges geeignetes Fügeverfahren mit dem Treibriemen zu verbinden.

## Patentansprüche

1. Transportiereinrichtung zum Transportieren von Gefäßen (5) mit einem Riemen (6, 6'), der einen Treibriemen (11) und eine mit den Gefäßen in Eingriff bringbare Auflage (14) umfasst,
wobei der Treibriemen (11) auf der von der Auflage wegweisenden Seite eine Antriebsverzahnung und ggf. einen vorzugsweise mittig verlaufenden Längssteg aufweist, **dadurch gekennzeichnet, dass** die Auflage (14) aus einem elastischen Material mit geschlossener Oberfläche gebildet wird, und dass die Auflage und darauf erhaben ausgeformte Elemente (13) aus einem sterilisierbaren Material bestehen.

2. Transportiereinrichtung nach Patentanspruch 1, wobei die mit den Gefäßen (5) in Eingriff bringbare Oberfläche der Auflage (14) strukturiert ausgebildet ist.

3. Transportiereinrichtung nach Anspruch 1 oder 2, **dadurch gekennzeichnet, dass** die mit den Gefässen (5) in Eingriff bringbare Oberfläche der Auflage (14) aus einer Vielzahl von noppen- und/oder finger- und/oder lamellen- und/oder sägezahnförmig geformten Elementen (13) gebildet wird.

4. Transportiereinrichtung nach Anspruch 3, **dadurch gekennzeichnet, dass** alle die Oberfläche der Auflage (14) bildenden Elemente (13) in ihrer Gesamtheit einstückig ausgebildet sind.

5. Transportiereinrichtung nach wenigstens einem der Ansprüche 3 oder 4, **dadurch gekennzeichnet, dass** die Elemente (13) mit) gleichmässigen Abständen, vorzugsweise mit ihrer Breite entsprechenden freien Zwischenräumen, in wenigstens einer längs zur Förderrichtung verlaufenden Reihe angeordnet sind, insbesondere mit einem Teilungsmass im Bereich zwischen 20 und 30 mm.

6. Transportiereinrichtung nach Anspruch 5, **dadurch gekennzeichnet, dass** die Elemente (13) in mehreren, vorzugsweise drei, quer zur Förderrichtung versetzten Reihen angeordnet sind.

7. Transportiereinrichtung nach Anspruch 6, **dadurch gekennzeichnet, dass** die Elemente (13) benachbarter Reihen längs zur Förderrichtung versetzt angeordnet sind, vorzugsweise um den halben Teilungsabstand von in einer Reihe liegenden Elementen.

8. Transportiereinrichtung nach wenigstens einem der vorhergehenden Ansprüche 1 bis 7, **dadurch gekennzeichnet, dass** das sterilisierbaren Material PVC umfasst.

9. Transportiereinrichtung nach wenigstens einem der vorhergehenden Ansprüche 1 bis 8, **dadurch gekennzeichnet, dass** der Riemen (6, 6') endlos ausgeführt ist.

10. Transportiereinrichtung nach wenigstens einem der vorhergehenden Ansprüche 1 bis 9, **dadurch gekennzeichnet, dass** wenigstens zwei mit Abstand einander in einer Umlaufebene gegenüberliegend angeordnete, mit gleicher oder voneinander abweichender, gleichsinnig gerichteter Geschwindigkeit antreibbare Riemen (6,6') eine Riemenstation (2) zum bodenfreien Transportieren von Gefässen (5) bilden.

11. Transportiereinrichtung nach wenigstens einem der vorhergehenden Ansprüche 1 bis 10, **dadurch gekennzeichnet, dass** der Riemen (6 ,6') Bestandteil einer Riemenstation (2) einer Inspektionsmaschine zum Kontrollieren von Flaschen oder dgl. Gefässe (5) mit im Bereich der Riemenstation (2) angeordneten Inspektionseinrichtungen (10) ist.

12. Transportiereinrichtung nach Anspruch 10 oder 11, **dadurch gekennzeichnet, dass** der Riemenstation (2) ein Gefässe (5) am Boden abstützend heranführender Zuförderer (1) vorgeordnet und/oder ein ebenfalls am Boden der Gefässe (5) angreifender Abförderer (3) nachgeordnet ist.

## Claims

1. Conveying device for conveying containers (5), comprising a belt (6,6') which includes a driving belt (11) and a support (14) which can be brought into engagement with the containers, wherein on the side pointing away from the support the driving belt (11) comprises drive teeth and optionally a preferably centrally running longitudinal web, **characterised in that** the support (14) is formed from an elastic material with a closed surface, and **in that** the support and raised elements (13) formed thereon are made from a material which can be sterilised.

2. Conveying device according to claim 1, wherein the surface of the support (14) which can be brought into engagement with the containers (5) has a structured design.

3. Conveying device according to claim 1 or 2, **characterised in that** the surface of the support (14) which can be brought into engagement with the containers (5) is formed from a large number of knoband/or finger- and/or disc- and/or saw-tooth shaped elements (13).

4. Conveying device according to claim 3, **characterised in that** all elements (13) forming the surface of the support (14) are constructed in one piece as a whole.

5. Conveying device according to at least one of claims 3 or 4, **characterised in that** the elements (13) are arranged at uniform intervals, preferably with free spaces corresponding to their width, in at least one row running longitudinally to the conveying direction, in particular with a spacing dimension in a range between 20 and 30 mm.

6. Conveying device according to claim 5, **characterised in that** the elements (13) are arranged in a plurality of, preferably three, rows offset transversely to the conveying direction.

7. Conveying device according to claim 6, **characterised in that** the elements (13) of adjacent rows are arranged offset longitudinally to the conveying direction, preferably by half the spacing from elements located in a row.

8. Conveying device according to at least one of the preceding claims 1 to 7, **characterised in that** the material which can be sterilised includes PVC.

9. Conveying device according to at least one of the preceding claims 1 to 8, **characterised in that** the belt (6, 6') has an endless design.

10. Conveying device according to at least one of the preceding claims 1 to 9, **characterised in that** at least two belts (6, 6') arranged at spaced apart from one another and so as to oppose each other in a rotational plane and which can be driven at the same speed or at different speeds in the same direction form a belt station (2) for freely suspended conveying of containers (5).

11. Conveying device according to at least one of the preceding claims 1 to 10, **characterised in that** the belt (6, 6') is a component of a belt station (2) of an inspection machine for controlling bottles or similar containers (5) with inspection devices (10) arranged in the region of the belt station (2).

12. Conveying device according to claim 10 or 11, **characterised in that** a feed conveyor (1) which advances a container (5) so it is supported on the base is arranged upstream of the belt station (2) and/or a removal conveyor (3) which likewise acts on the base of the container (5) is arranged downstream of the belt station (2).

## Revendications

1. Dispositif de transport pour le transport de récipients (5) avec une courroie (6, 6') comportant une courroie de transmission (11) et une face d'appui qui peut être mise en contact avec les récipients (14),
dans lequel la courroie de transmission (11) comporte une denture d'entraînement sur le côté opposé à la face d'appui et, au besoin, une nervure longitudinale préférablement médiane,
**caractérisé**
**en ce que** la face d'appui (14) est constituée en un matériau élastique à surface fermée, et en ce que la face d'appui et des éléments conformés (13) faisant saillie sur celle-ci sont constitués en un matériau stérilisable.

2. Dispositif de transport selon la revendication 1, dans lequel la surface de la face d'appui (14) qui peut être mise en contact avec les récipients (5) est constituée de manière structurée.

3. Dispositif de transport selon la revendication 1 ou 2, **caractérisé en ce que** la surface de la face d'appui (14) qui peut être mise en contact avec les récipients (5) est constituée d'une pluralité d'éléments (13) constitués sous forme de protubérances, de doigts, de lamelles et/ou de dents de scie.

4. Dispositif de transport selon la revendication 3, **caractérisé en ce que** tous les éléments (13) qui constituent la surface de la face d'appui (14) sont constitués dans leur ensemble d'une seule pièce.

5. Dispositif de transport selon au moins l'une des revendications 3 ou 4, **caractérisé en ce que** les éléments (13) sont agencés à des écartements réguliers, préférablement avec des espacements libres correspondant à leur largeur, sur au moins une rangée disposée selon la direction de transport, en particulier avec un espacement compris dans une plage de 20 mm à 30 mm.

6. Dispositif de transport selon la revendication 5, **caractérisé en ce que** les éléments (13) sont agencés en plusieurs rangées décalées, préférablement trois rangées, perpendiculairement à la direction de transport.

7. Dispositif de transport selon la revendication 6, **caractérisé en ce que** les éléments (13) de rangées voisines sont agencés de façon décalée selon la direction de transport, préférablement de la moitié du pas d'espacement d'éléments disposés sur une rangée.

8. Dispositif de transport selon au moins l'une des revendications précédentes 1 à 7, **caractérisé en ce que** le matériau stérilisable comporte du PVC.

9. Dispositif de transport selon au moins l'une des revendications précédentes 1 à 8, **caractérisé en ce que** la courroie (6, 6') est réalisée de manière continue.

10. Dispositif de transport selon au moins l'une des revendications précédentes 1 à 9, **caractérisé en ce qu'**au moins deux courroies (6, 6') qui peuvent être entraînées à des vitesses identiques ou différentes dans une même direction, agencées de manière opposée dans un plan de circulation avec un espacement entre elles, constituent une station à courroies (2) pour un transport sans fond de récipients (5).

11. Dispositif de transport selon au moins l'une des revendications précédentes 1 à 10, **caractérisé en ce que** la courroie (6, 6') fait partie d'une station à courroies (2) d'une machine d'inspection pour contrôler des bouteilles ou des récipients similaires (5) avec des dispositifs d'inspection (10) agencés dans la zone de la station à courroies (2).

12. Dispositif de transport selon la revendication 10 ou 11, **caractérisé en ce qu'**un convoyeur d'alimentation (1) qui amène un récipient (5) en le portant par le fond est agencé en amont de la station à courroies (2) et/ou **en ce qu'**un convoyeur d'enlèvement (3) qui saisit également les récipients (5) par le fond est agencé en aval.
